# EUROPEAN PATENT APPLICATION

(11) **EP 4 628 537 A1**
(43) Date of publication of application: **08.10.2025**
(21) Application number: 22966977.5
(22) Date of filing: 05.12.2022
(51) Int. Cl.: C08L 63/00, C08J 5/24, C08L 81/06, C08K 5/20, C08L 79/08, C08K 7/06

(54) **HIGH-STRENGTH HIGH-MODULUS HOT-MELT EPOXY RESIN COMPOSITION AND PREPARATION METHOD THEREFOR, AND PRODUCT**

(30) Priority: 28.11.2022 CN 202211504572
(71) Applicant: Aerospace Research Institute of Materials & Processing Technology, Beijing 100076 (CN)
(72) Inventor: ZUO, Xiaobiao, Beijing 100076 (CN); SHANG, Chengyuan, Beijing 100076 (CN); SHI, Peiluo, Beijing 100076 (CN); FENG, Zhihai, Beijing 100076 (CN); ZHOU, Jincen, Beijing 100076 (CN); WANG, Ying, Beijing 100076 (CN); ZHOU, Yu, Beijing 100076 (CN); LING, Hui, Beijing 100076 (CN)
(74) Representative: Studio Torta S.p.A.
(86) International application number: PCT/CN2022/136493
(87) International publication number: WO 2024/113391

(57) **Abstract**

A high-strength high-modulus hot-melt epoxy resin composition and a preparation method therefor, and a prepreg. The resin composition comprises a main-body epoxy resin which comprises specific components at a specific content ratio, a small molecule compound, a thermoplastic resin, and a curing agent which comprises specific components at a specific content ratio. The modulus of the resin matrix is improved by means of intermolecular forces and the filling of free volumes with small molecules; moreover, the processing properties of the resin matrix and the interface bonding force between the resin matrix and reinforcing fibers are improved by selecting preferable thermoplastic resins with different active groups. The compression-tension balance characteristic of a composite material prepared from the resin matrix and a carbon fiber reinforcement is obviously improved, the 0° compression strength thereof is greater than or equal to 1800 MPa, and the 0° compression strength/0° tensile strength matching coefficient is greater than or equal to 0.7 and can reach up to 0.83; moreover, the resin matrix has good manufacturability and overlaying properties, and can satisfy the design requirements of the aerospace field with regard to a high compression-tension matching degree of carbon fiber composite materials.

## Description

### CROSS-REFERENCE TO RELATED APPLICATION

This application claims priority to Chinese Patent Application No. 202211504572.4, titled "HIGH-STRENGTH HIGH-MODULUS HOT-MELT EPOXY RESIN COMPOSITION AND PREPARATION METHOD THEREFOR, AND PRODUCT", filed with the China National Intellectual Property Administration on November 28, 2022, the entire content of which is incorporated herein by reference.

### FIELD

The present invention relates to a high-strength and high-modulus hot-melt epoxy resin composition, a method for preparing the same, a prepreg and a composite material, which fall within the technical field of manufacturing a structural composite material from a hot-melt prepreg.

### BACKGROUND

A carbon fiber reinforced epoxy resin-based composite material has a series of excellent properties, such as high specific strength, high specific modulus, good designability and good manufacturability, which is suitable for manufacturing a large-scale main load-bearing complex component, and is widely used in aerospace, rail transportation, shipbuilding and other fields.

However, it is well known that a compressive strength of the carbon fiber reinforced epoxy resin-based composite material is generally only 50% of a tensile strength. An insufficient compressive strength has become a bottleneck of design and application, which restricts application and popularization of a resin-based composite material in a ship mast, a golf club and an aerospace device. According to micromechanics of a composite material, a compressive strength of the composite material is greatly affected by a stiffness of a matrix, and a higher modulus of a resin matrix can delay a compressive failure of the composite material. In view of a phenomenon that the compressive strength and the tensile strength of the composite material do not match, technicians in the field of the composite material have carried out research on improving a compressive strength of a high performance carbon fiber composite material. Patent document 1 (JP2003026768-A) discloses an epoxy resin composition containing multifunctional epoxy, diglycidyl aniline epoxy and 4,4'-diaminodiphenyl sulfone, and an elastic modulus of a resin is increased by increasing a crosslinking density of a cured product. Patent document 2 (JP11217422-A) discloses an epoxy resin containing tert-butylpyrocatechol or tert-butylhydroquinone, and an elastic modulus of a resin and a compressive strength of a composite material are increased by increasing a hydrogen bond density of a cured product. However, in terms of effects achieved, the epoxy resin compositions disclosed in patent documents 1 and 2 are not ideal in terms of improving the modulus of the resin and the compressive strength of the composite material.

In addition, in scientific literature [1], according to a wet winding process, a 0° compressive strength of a glass fiber reinforced composite material is improved from 850MPa to 1337.5MPa by modifying an m-xylylenediamine and m-phenylenediamine system with trifunctional alicyclic epoxy resin. In scientific literature [2], a corresponding hot-melt prepreg is prepared by blending m-aminophenol epoxy resin and bisphenol A epoxy resin, and using 4,4-diaminodiphenyl sulfone as a curing agent. A 0° compressive strength of a composite material can reach up to 1,466MPa. To sum up, the 0° compressive strength of the composite material currently studied is still relatively low, which is difficult to meet needs of engineering applications.
[1] Yaping ZHENG, research on high modulus of resin matrix and high compressive composite material [J]. Materials Reports, 2001, 15(8):24.
[2] Wei LIU, Tianjiao ZHANG, Jianwen BAO, et al, effect of resin cross-linked structure characteristics on longitudinal compressive performance of composite material [J]. Journal of Aeronautical Materials, 2016, 36(1):75-80.

### SUMMARY

An object of the present invention is to overcome shortcomings of the prior art and provide a high-strength and high-modulus hot-melt epoxy resin composition. A modulus of a resin matrix is improved by means of intermolecular forces and a molecular packing angle. Processing properties of the resin matrix and interface bonding forces between the resin matrix and a reinforcing carbon fiber are increased by selecting preferable thermoplastic resins with different active groups. A compression-tension balance characteristic of a composite material prepared from the resin matrix and a carbon fiber reinforcement is significantly improved, a 0° compressive strength of the composite material is greater than or equal to 1,800MPa, and a 0° compressive strength/0° tensile strength matching coefficient is greater than or equal to 0.7 and can reach up to 0.83. At the same time, the resin matrix has good manufacturability and spreadability, which can satisfy design requirements of the aerospace field with regard to compression-tension matching of a carbon fiber composite material.

Another object of the present invention is to provide a method for preparing a high-strength and high-modulus hot-melt epoxy resin composition, and a prepreg including the resin composition and a composite material.

The above-mentioned objects of the present invention are achieved by following technical solutions.

In a first aspect, a hot-melt epoxy resin composition is provided, and includes following components in mass fraction:
100 parts of a main-body epoxy resin;
30 to 60 parts of a curing agent;
5 to 15 parts of a thermoplastic resin;
10 to 25 parts of a small molecule compound.

The small molecule compound is a mixture of N-benzoylanilide and N,N-(p-phenylene)bisbenzamide with specific structural formulas as follows:

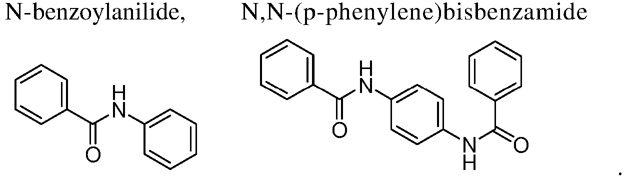

In combination with the first aspect, in some implementations of the first aspect, the small molecule compound is prepared by mixing N-benzoylanilide and N,N-(p-phenylene)bisbenzamide in a mass ratio of 100:(10-150).

In combination with the first aspect, in some implementations of the first aspect, the small molecule compound is prepared by mixing N-benzoylanilide and N,N-(p-phenylene)bisbenzamide in a mass ratio of 100:(25-100).

When a ratio of two molecular reinforcing agents is 100:100, a relatively excellent modulus of a resin matrix is reflected, and at the same time, it is a limit range of the corresponding ratio.

In combination with the first aspect, in some implementations of the first aspect, the main-body epoxy resin is one or a combination of tetraglycidyl m-phenylenediamine, tetraglycidyl diaminodiphenylmethane, triglycidyl m-aminophenol or 1,3,5-triglycidyl isocyanurate.

In combination with the first aspect, in some implementations of the first aspect, the main-body epoxy resin satisfies any one of:
the main-body epoxy resin being prepared by mixing tetraglycidyl diaminodiphenylmethane and triglycidyl m-aminophenol in a mass ratio of 1:(0.2-5);
the main-body epoxy resin being prepared by mixing tetraglycidyl m-phenylenediamine, triglycidyl m-aminophenol and 1,3,5-triglycidyl isocyanurate in a mass ratio of (7-9):1:1.

Spreadability at room temperature and a storage period at room temperature of the composition can be adjusted by adjusting a ratio of the main-body epoxy resin.

In combination with the first aspect, in some implementations of the first aspect, the curing agent is one or a combination of 3,3'-diaminodiphenyl sulfone and 3,3'-diamino benzanilide.

Compared with a case where the curing agent is 3,3-diaminodiphenyl sulfone alone, the curing agent being the combination of 3,3'-diaminodiphenyl sulfone and 3,3'-diamino benzanilide is beneficial to improving a storage period of a prepreg.

In combination with the first aspect, in some implementations of the first aspect, the curing agent is prepared by mixing 3,3'-diaminodiphenyl sulfone and 3,3'-diamino benzanilide in a mass ratio of 100:(5-200).

In combination with the first aspect, in some implementations of the first aspect, the thermoplastic resin is one or a combination of polyarylethersulfone, polyimide or benzimidazole.

In combination with the first aspect, in some implementations of the first aspect, an average molecular weight of the thermoplastic resin is ≥50,000.

Rheological properties can be achieved with a small amount of a thermoplastic resin having a relatively high molecular weight.

In a second aspect, a method for preparing a hot-melt epoxy resin composition is provided, and includes following steps.
(1) 100 parts by mass of a main-body epoxy resin is heated to 120 to 180°C, and 5 to 15 parts by mass of a thermoplastic resin and 10 to 25 parts by mass of a small molecule compound are added under stirring for 30 to 120min until they are dissolved and melted completely and dispersed evenly.
(2) A component obtained in step (1) is cooled to 60 to 90°C, and 30 to 60 parts of a curing agent are added under stirring for 20 to 60min for even mixing, the hot-melt epoxy resin composition is obtained.

The small molecule compound is a mixture of N-benzoylanilide and N,N-(p-phenylene)bisbenzamide with specific structural formulas as follows:

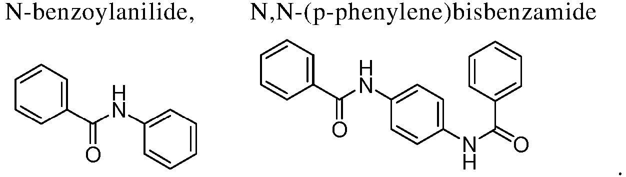

In a third aspect, there is provided a prepreg including the composition as described in any one of the above-mentioned implementations of the first aspect and a reinforcing carbon fiber.

In combination with the third aspect, in some implementations of the third aspect, the composition accounts for 25% to 50% by mass percentage of the prepreg.

In the fourth aspect, a composite material is provided, and the composite material is obtained by curing the prepreg as described in any one of the above-mentioned implementations of the third aspect.

Beneficial effects of the present invention compared with the prior art are as follows:
(1) The hot-melt epoxy resin composition provided in the present invention includes the main-body epoxy resin which includes specific components in a specific content ratio, the curing agent which includes specific components in a specific content ratio, the thermoplastic resin and the small molecule compound. Intermolecular forces and a packing density of a resin system are increased by physically addition of small molecules antiplasticization, which effectively improves a modulus and a strength of the resin matrix. At the same time, a thermoplastic resin having a high molecular weight is taken as a rheological control component to satisfy requirements of a hot melt process while minimizing the loss of the modulus of the resin matrix.
(2) The curing agent provided in the present invention is one or a combination of 3,3-diaminodiphenyl sulfone or 3,3-diamino benzanilide. Preferably, the curing agent is prepared by mixing 3,3-diaminodiphenyl sulfone and 3,3-diamino benzanilide in a mass ratio of 100:(5-200). Preferred two curing agents are mixed in the above-mentioned ratio to obtain a further improved packing density and enhanced intermolecular hydrogen bonding forces, thus obtaining a high-strength and high-modulus epoxy resin matrix and a further improved compression/tension matching coefficient of the composite material. At the same time, an epoxy system adopting the above-mentioned curing agent has suitable activity, which can ensure that the resin has a prolonged storage period.
(3) The thermoplastic resin provided in the present invention as the rheological control component is one or a combination of polyarylethersulfone, polyimide or benzimidazole, preferably polyether sulfone or polyimide, and more preferably polyarylethersulfone or polyimide having an average molecular weight of ≥ 50,000. Adoption of the thermoplastic resin having a high modulus can not only realize a process rheological control of an epoxy resin system to satisfy requirements of the hot melt process, but also minimize sacrifice of a modulus of a whole resin matrix.
(4) The small molecule compound provided in the present invention is prepared by mixing N-benzoylanilide and N,N-(p-phenylene)bisbenzamide in a mass ratio of 100:(10-150), and preferably 100:(25-100). Due to small molecule and good compatibility with the epoxy resin, free volumes of different sizes in a cross-linked network can be fully filled in a curing process of the epoxy resin, which greatly improves the packing efficiency of the epoxy resin and increases the modulus of the resin. At the same time, since the molecule contains a relatively high content of amide strong polar groups and does not participate in a reaction, the modulus of the resin matrix can be further increased by the action of intermolecular hydrogen bonds.
(5) The method for preparing the high-strength and high-modulus hot-melt epoxy resin provided in the present invention is that the main-body glycidylamine epoxy resin, the thermoplastic resin and the small molecule compound are heated, and they are dissolved and dispersed evenly, and then an aromatic amine curing agent is added at a certain temperature to obtain the high-strength and high-modulus hot-melt epoxy resin. The preparation method is simple and easy. The resin matrix has good manufacturability and spreadability, the compression-tension balance of the composite material prepared by the resin matrix is significantly improved, and the compression/tension matching coefficient can reach up to 0.83, which is suitable for engineering preparation of the high-strength and high-modulus hot-melt epoxy resin, batch production of hot-melt prepregs and engineering application, and can satisfy design requirements of the aerospace field with regard to high compression-tension matching of the carbon fiber composite material.

### DETAILED DESCRIPTION

The present invention is further described in detail below in conjunction with specific embodiments. Raw materials of a high-strength and high-modulus hot-melt epoxy resin composition provided in the present invention include following components: a main-body epoxy resin, a curing agent, a thermoplastic resin and a small molecular compound. The curing agent is an aromatic amine curing agent.

In an alternative embodiment, a mass ratio of the main-body epoxy resin, the curing agent, the thermoplastic resin and the small molecular compound is 100: (30-60): (5-15): (10-25).

In an alternative embodiment, the main-body epoxy resin is one or a combination of tetraglycidyl m-phenylenediamine, tetraglycidyl diaminodiphenylmethane, triglycidyl m-aminophenol or 1,3,5-triglycidyl isocyanurate. Preferably, the main-body epoxy resin has glycidylamine groups, which has good interfacial bonding with a carbon fiber and is a rigid multifunctional epoxy resin, so that a resin matrix having a relatively high modulus can be obtained.

In an alternative embodiment, the curing agent is one or a combination of 3,3'-diamino benzanilide or 3,3'-diaminodiphenyl sulfone.

In an alternative embodiment, the curing agent is one or a combination of 3,3'-diaminodiphenyl sulfone or 3,3'-diamino benzanilide. Preferably, the curing agent is prepared by mixing 3,3'-diaminodiphenyl sulfone and 3,3'-diamino benzanilide in a mass ratio of 100:(5-200). -NH₂ functional groups of preferred two curing agents are both meta-substituted, and there are two spatial conformations, which can be cured and cross-linked with the main-body epoxy resin to increase a packing density of a cross-linked network and improve a modulus of the resin matrix. At the same time, 3,3'-diamino benzanilide contains an active hydrogen bond, and cross-linked molecular chain segments can form intermolecular hydrogen bonding forces, thus further improving a strength and a stiffness of the resin matrix. At the same time, an epoxy system using the above-mentioned preferred two curing agents has suitable activity (reaction activity of 3,3'-diamino benzanilide with the epoxy resin is lower than that of 3,3'-diaminodiphenyl sulfone), which can ensure that the resin has a prolonged storage period.

In an alternative embodiment, the thermoplastic resin as a rheological control component is one or a combination of polyarylethersulfone, polyimide or benzimidazole. Polyarylethersulfone or polyimide having a molecular weight of ≥ 50,000 is more preferred. Adoption of the thermoplastic resin can not only realize a process rheological control of an epoxy resin system to satisfy requirements of a hot melt process (generally speaking, a viscosity at room temperature of 10,000 to 50,000Pa·s can ensure that a prepared prepreg has good spreadability and tackness), but also minimize sacrifice of a modulus of a whole resin matrix.

In an alternative embodiment, the small molecule compound is a mixture of N-benzoylanilide and N,N-(p-phenylene)bisbenzamide with specific structural formulas as follows:

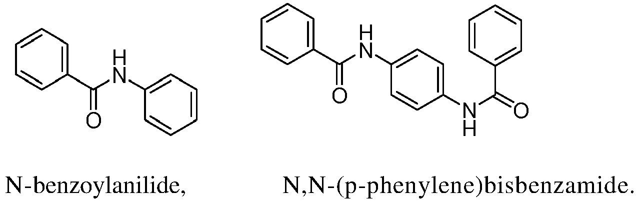

In an alternative embodiment, the small molecule compound is prepared by mixing N-benzoylanilide and N,N-(p-phenylene)bisbenzamide in a mass ratio of 100:(10-150). More preferably, the small molecule compound is prepared by mixing N-benzoylanilide and N,N-(p-phenylene)bisbenzamide in a mass ratio of 100:(25-100). Preferred small molecular compound (mixture) has good compatibility with the epoxy resin, and molecules of N-benzoylanilide and N,N-dibenzoylanilide are small and different in size, which can fully fill free volumes of different sizes in the cross-linked network in a curing process of the epoxy resin, greatly improve a packing efficiency of the epoxy resin and improve a modulus of the resin. At the same time, since the molecule contains a relatively high content of amide strong polar groups and does not participate in a reaction, intermolecular hydrogen bonds can be formed efficiently to limit movement of the cross-linked network and further improve the modulus of the resin matrix.

In an alternative embodiment, the high-strength and high-modulus hot-melt epoxy resin composition has a tensile strength of ≥100MPa and a tensile modulus of ≥5.0GPa.

The present invention further provides a method for preparing a high-strength and high-modulus epoxy resin, which includes following steps.

In step (1), raw materials are weighed according to a ratio of the raw materials provided above.

In step (2), a weighed main-body epoxy resin is heated to 120 to 180°C, a weighed thermoplastic resin and a weighed small molecule compound are added until they are dissolved and melted completely and dispersed evenly.

Specifically, when this method is used for mixing, it can not only ensure that the thermoplastic resin is fully dissolved, but also ensure that the small molecular compound is fully melted, and ensure that a viscosity at room temperature and a rheological property of the resin system are controlled.

In step (3), a component obtained in step (2) is cooled to 60 to 90°C, and a weighed curing agent is added under stirring for 20 to 60min for even mixing, and the high-strength and high-modulus hot-melt epoxy resin composition is obtained.

Specifically, when this method is used for mixing, it can not only ensure even mixing, but also avoid deterioration of manufacturability due to excessive prepolymerization degree caused by inappropriate temperature or too long time.

A prepreg includes the hot-melt epoxy resin composition and a reinforcing carbon fiber.

In an alternative embodiment, a content of the hot-melt epoxy resin in the prepreg is 25% to 50% by mass percentage.

A high-strength and high-modulus carbon fiber reinforced composite material prepared from the above-mentioned high-strength and high-modulus hot-melt epoxy resin matrix has a 0° compressive strength of ≥1,800MPa, and a 0° compressive strength/0° tensile strength matching coefficient of the composite material of ≥0.7.

In following examples, a viscosity of a resin system (variation of viscosity rheological properties in a temperature rise process measured from room temperature) was tested by using a Physica MCR 301 rheological analyzer from Anton Paar Company, with a heating rate of 1°C/min and a testing range of 25°C to 225°C. Mechanical properties of a resin and a composite material were tested by using a universal material testing machine from Instron company, UAS. A tensile strength and a modulus of a resin casting were tested according to GB/T 16421, a 0° tensile strength of a composite material was tested according to ASTM 3059, and a 0° compressive strength was tested according to ASTM D3410. A compression/tension matching coefficient of a composite material was calculated by 0° compressive strength/0° tensile strength (unitless dimension).

### Example 1

A high-strength and high-modulus hot-melt epoxy resin matrix is provided in this example, and a specific method for preparing the same includes following steps.

In step (1), 50kg of tetraglycidyl diphenylmethane and 50kg of triglycidyl m-aminophenol, 5kg of a thermoplastic resin being polyarylethersulfone (PES-C) (molecular weight of 68,000), 10kg of a small molecule compound (8kg of N-benzoylanilide and 2kg of N,N-(p-phenylene)bisbenzamide), 30kg of 3,3-diaminodiphenyl sulfone and 15kg of 3,3-diamino benzanilide were weighed.

In step (2), a weighed main-body epoxy resin being tetraglycidyl diphenylmethane and triglycidyl m-aminophenol was heated to 120°C, a weighed thermoplastic resin being polyarylethersulfone and a weighed small molecule compound were added under mechanically stirring for 60min, and they were dissolved to form an even transparent system.

In step (3), a weighed curing agent being 3,3'-diaminodiphenyl sulfone and 3,3'-diamino benzanilide was added into an even dissolved phase obtained in the step (2) at 60°C under stirring for 20min for even dispersion, and a high-strength and high-modulus hot-melt epoxy resin composition was obtained.

A resin casting has a tensile strength of 102MPa and a tensile modulus of 5.2GPa. An obtained high-strength and high-modulus hot-melt epoxy resin was pre-impregnated with a unidirectional carbon fiber (TG800-12K) to prepare a hot-melt prepreg. A content of the epoxy resin in the hot-melt prepreg is 32%, and the hot-melt prepreg has good spreadability and viscosity (a viscosity at room temperature of a matrix resin is 20,000Pa·s). A storage period at room temperature is 21 days. After curing, a composite material has a 0° compressive strength of 1,850MPa, a 0° tensile strength of 2,490MPa, and a compression/tension matching coefficient of 0.78.

### Example 2

A high-strength and high-modulus hot-melt epoxy resin matrix is provided in this example, and a specific method for preparing the same includes following steps.

In step (1), 80kg of tetraglycidyl m-phenylenediamin, 10kg of triglycidyl m-aminophenol and 10kg of 1,3,5-triglycidyl isocyanurate, 10kg of a thermoplastic resin being polyimide (P84) (molecular weight of 55,000), 15kg of a small molecule compound (10kg of N-benzoylanilide and 5kg of N,N-(p-phenylene)bisbenzamide), 25kg of 3,3'-diaminodiphenyl sulfone and 20kg of 3,3'-diamino benzanilide were weighed.

In step (2), a weighed main-body epoxy resin being tetraglycidyl m-phenylenediamin, triglycidyl m-aminophenol and 1,3,5-triglycidyl isocyanurate was heated to 150°C, a weighed thermoplastic resin being polyimide and a weighed small molecule compound were added under mechanically stirring for 60min, and they were dissolved to form an even transparent system.

In step (3), a weighed curing agent being 3,3'-diaminodiphenyl sulfone and 3,3'-diamino benzanilide was added into an even dissolved phase obtained in the step (2) at 90°C under stirring for 60min for even dispersion, and a high-strength and high-modulus hot-melt epoxy resin composition was obtained.

A resin casting has a tensile strength of 112MPa and a tensile modulus of 5.6GPa. An obtained high-strength and high-modulus hot-melt epoxy resin was pre-impregnated with a high-strength and high-modulus carbon fiber (M40J-6K) to prepare a hot-melt prepreg. A content of the epoxy resin in the hot-melt prepreg is 32%, and the hot-melt prepreg has good spreadability and viscosity (a viscosity at room temperature of a matrix resin is 25,000Pa·s). A storage period at room temperature is 21 days. After curing, a composite material has a 0° compressive strength of 1,820MPa, a 0° tensile strength of 2,190MPa, and a compression/tension matching coefficient of 0.83.

### Example 3

A high-strength and high-modulus hot-melt epoxy resin matrix is provided in this example, and a specific method for preparing the same includes following steps.

In step (1), 80kg of tetraglycidyl m-phenylenediamin and 20kg of triglycidyl m-aminophenol, 5kg of a thermoplastic resin being polyimide (PES-C) (molecular weight of 68,000), 25kg of a small molecule compound (12.5kg of N-benzoylanilide and 12.5kg of N,N-(p-phenylene)bisbenzamide), 25kg of 3,3'-diaminodiphenyl sulfone and 20kg of 3,3'-diamino benzanilide were weighed.

In step (2), a weighed main-body epoxy resin being tetraglycidyl m-phenylenediamin and triglycidyl m-aminophenol was heated to 160°C, a weighed thermoplastic resin being polyarylethersulfone (PES-C) and a weighed small molecule compound were added under mechanically stirring for 120min to form an even transparent system.

In step (3), a weighed curing agent being 3,3'-diaminodiphenyl sulfone and 3,3'-diamino benzanilide was added into an even dissolved phase obtained in the step (2) at 80°C under stirring for 60min for even dispersion, and a high-strength and high-modulus hot-melt epoxy resin composition was obtained.

A resin casting has a tensile strength of 125MPa and a tensile modulus of 6.3GPa. An obtained high-strength and high-modulus hot-melt epoxy resin was pre-impregnated with a high-strength and medium-modulus carbon fiber (T800H-12K) to prepare a hot-melt prepreg. A content of the epoxy resin in the hot-melt prepreg is 32%, and the hot-melt prepreg has good spreadability and viscosity (a viscosity at room temperature of a matrix resin is 26,500Pa·s). A storage period at room temperature is 21 days. After curing, a composite material has a 0° compressive strength of 2,100MPa, a 0° tensile strength of 2,660MPa, and a compression/tension matching coefficient of 0.79.

### Comparative Example 1

This example provides a comparative example to Example 3 to compare effects of adding a small molecular compound on a strength and a modulus of a resin matrix, and a 0° compressive strength of a composite material. A specific preparation method includes following steps.

In step (1), 80kg of tetraglycidyl m-phenylenediamin and 20kg of triglycidyl m-aminophenol, 5kg of a thermoplastic resin being polyarylethersulfone (PES-C) (molecular weight of 68,000), 25kg of 3,3'-diaminodiphenyl sulfone and 20kg of 3,3'-diamino benzanilide were weighed.

In step (2), a weighed main-body epoxy resin being tetraglycidyl m-phenylenediamin and triglycidyl m-aminophenol was heated to 160°C, a weighed thermoplastic resin was added under mechanically stirring for 120min to form an even transparent system.

In step (3), a weighed curing agent being 3,3'-diaminodiphenyl sulfone and 3,3'-diamino benzanilide was added into the even system obtained in the step (2) at 80°C under stirring for 60min for even dispersion, and a high-strength and high-modulus hot-melt epoxy resin composition was obtained.

A resin casting has a tensile strength of 90MPa and a tensile modulus of 4.5GPa. An obtained high-strength and high-modulus hot-melt epoxy resin was pre-impregnated with a high-strength and medium-modulus carbon fiber (T800H-12K) to prepare a hot-melt prepreg. A content of the epoxy resin in the hot-melt prepreg is 32%, and the hot-melt prepreg has good spreadability and viscosity (a viscosity at room temperature of a matrix resin is 19,500Pa·s). After curing, the composite material has a 0° compressive strength of 1,670MPa, a 0° tensile strength of 2,650MPa, and a compression/tension matching coefficient of 0.63.

### Comparative Example 2

A comparative example to Example 3 is provided in this example. In order to compare effect of taking 3,3'-diaminodiphenyl sulfone alone as a curing agent on a storage period of a material system, 55kg of 3,3'-diaminodiphenyl sulfone was taken as the curing agent instead of 35kg of 3,3'-diaminodiphenyl sulfone and 20kg of 3,3'-diamino benzanilide in a meta position. A specific preparation method includes following steps.

In step (1), 80kg of tetraglycidyl m-phenylenediamin and 20kg of triglycidyl m-aminophenol, 5kg of a thermoplastic resin being polyimide (PES-C) (molecular weight of 68,000), 25kg of a small molecule compound (12.5kg of N-benzoylanilide and 12.5kg of N,N-(p-phenylene)bisbenzamide), and 55kg of 3,3'-diaminodiphenyl sulfone were weighed.

In step (2), a weighed main-body epoxy resin being tetraglycidyl m-phenylenediamin and triglycidyl m-aminophenol was heated to 160°C, a weighed thermoplastic resin being polyarylethersulfone (PES-C) and a weighed small molecule compound were added under mechanically stirring for 120min to form an even transparent system.

In step (3), a weighed curing agent being 3,3'-diaminodiphenyl sulfone was added into an even dissolved phase obtained in the step (2) at 80°C under stirring for 60min for even dispersion, and a high-strength and high-modulus hot-melt epoxy resin composition was obtained.

A resin casting has a tensile strength of 120MPa and a tensile modulus of 6.3GPa. An obtained high-strength and high-modulus hot-melt epoxy resin was pre-impregnated with a high-strength and medium-modulus carbon fiber (T800H-12K) to prepare a hot-melt prepreg. A content of the epoxy resin in the hot-melt prepreg is 32%, and the hot-melt prepreg has good spreadability and viscosity (a viscosity at room temperature of a matrix resin is 26,500Pa·s). A storage period at room temperature is 7 days. After curing, a composite material has a 0° compressive strength of 2,110MPa, a 0° tensile strength of 2,660MPa, and a compression/tension matching coefficient of 0.79.

The above is only a specific embodiment of the present invention, but the protection scope of the present invention is not limited thereto. Any changes or substitutions that can be easily thought of by those skilled in the art within the technical scope disclosed in the present invention should be covered within the protection scope of the present invention. Parts of that present invention that are not described in detail belong to the common knowledge of those skilled in the art.

## Claims

1. A hot-melt epoxy resin composition, **characterized by** comprising following components in mass fraction:
100 parts of a main-body epoxy resin;
30 to 60 parts of a curing agent;
5 to 15 parts of a thermoplastic resin;
10 to 25 parts of a small molecule compound;
wherein the small molecule compound is a mixture of N-benzoylanilide and N,N-(p-phenylene)bisbenzamide with specific structural formulas as follows:

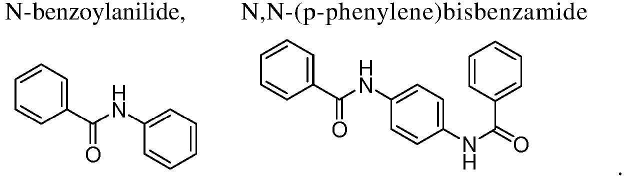

2. The composition of claim 1, **characterized in that** the small molecule compound is prepared by mixing N-benzoylanilide and N,N-(p-phenylene)bisbenzamide in a mass ratio of 100:(10-150).

3. The composition of claim 2, **characterized in that** the small molecule compound is prepared by mixing N-benzoylanilide and N,N-(p-phenylene)bisbenzamide in a mass ratio of 100:(25-100).

4. The composition of any one of claims 1 to 3, **characterized in that** the main-body epoxy resin is one or a combination of tetraglycidyl m-phenylenediamine, tetraglycidyl diaminodiphenylmethane, triglycidyl m-aminophenol or 1,3,5-triglycidyl isocyanurate.

5. The composition of claim 4, **characterized in that** the main-body epoxy resin satisfies any one of:
the main-body epoxy resin being prepared by mixing tetraglycidyl diaminodiphenylmethane and triglycidyl m-aminophenol in a mass ratio of 1:(0.2-5);
the main-body epoxy resin being prepared by mixing tetraglycidyl m-phenylenediamine, triglycidyl m-aminophenol and 1,3,5-triglycidyl isocyanurate in a mass ratio of (7-9):1:1.

6. The composition of any one of claims 1 to 5, **characterized in that** the curing agent is one or a combination of 3,3'-diaminodiphenyl sulfone and 3,3'-diamino benzanilide.

7. The composition of claim 6, **characterized in that** the curing agent is prepared by mixing 3,3'-diaminodiphenyl sulfone and 3,3'-diamino benzanilide in a mass ratio of 100:(5-200).

8. The composition of any one of claims 1 to 7, **characterized in that** the thermoplastic resin is one or a combination of polyarylethersulfone, polyimide or benzimidazole.

9. The composition of any one of claims 1 to 8, **characterized in that** an average molecular weight of the thermoplastic resin is ≥50,000.

10. A method for preparing a hot-melt epoxy resin composition, **characterized by** comprising following steps:
(1) heating 100 parts by mass of a main-body epoxy resin to 120 to 180°C, and adding 5 to 15 parts by mass of a thermoplastic resin and 10 to 25 parts by mass of a small molecule compound under stirring for 30 to 120min until they are dissolved and melted completely and dispersed evenly;
(2) cooling a component obtained in step (1) to 60 to 90°C, and adding 30 to 60 parts of a curing agent under stirring for 20 to 60min for even mixing, obtaining the hot-melt epoxy resin composition;
wherein the small molecule compound is a mixture of N-benzoylanilide and N,N-(p-phenylene)bisbenzamide with specific structural formulas as follows:

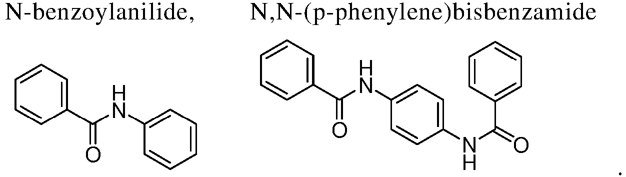

11. A prepreg, **characterized by** comprising the composition of any one of claims 1 to 9 and a reinforcing carbon fiber.

12. The prepreg of claim 11, **characterized in that** the composition accounts for 25% to 50% by mass percentage of the prepreg.

13. A composite material, **characterized in that** the composite material is obtained by curing the prepreg of claim 11 or 12.
